# EUROPEAN PATENT APPLICATION

(11) **EP 2 248 667 A1**
(43) Date of publication of application: **10.11.2010**
(21) Application number: 09006036.9
(22) Date of filing: 30.04.2009
(51) Int. Cl.: B32B 27/32, C08J 5/18, C08L 23/08, C08L 23/10, C08L 23/14

(54) **Composition and film comprising a C4-C10 alpha olefin containing polyolefin**

(71) Applicant: Borealis AG, 1220 Vienna (AT)
(72) Inventor: Schedening, Tonja, 4470 Enns (AT); Grein, Christelle, 4020 Linz (AT); Gloger, Dietrich, 4020 Linz (AT)
(74) Representative: Kador & Partner

(57) **Abstract**

The present invention relates to a composition comprising
(A) an LDPE in an amount of 15 to 50 wt.-% and
(B) a polymer blend in an amount of 50 to 85 wt.-%,

wherein polymer blend (B) consists of
20 - 80 wt.-% propylene random copolymer having a C₂ content of equal or below 4 wt.-% and
80 - 20 wt.-% of a polyolefin comprising at least one C₄₋₁₀ alpha olefin,
a film, a coextruded film and an article made thereof, the use of the composition as a peel layer, and the use of a C₄₋₁₀ alpha olefin in a film for lowering haze-increase when sterilising the film.

## Description

The present invention relates to a composition and a film comprising a random polypropylene copolymer and LDPE. The invention further relates to coextruded films and the articles including such films. The invention is also concerned with peelable layers and the use of alpha olefins for the control of haze.

Due to the chemical and thermal resistance as well as mechanical strength of polypropylene, films of polypropylene are used in different applications, in particular in medical and food packaging applications like retortable packaging. In these applications, polypropylene films may be sterilised at high temperature by steam or high energy radiation, particularly beta and gamma radiation. However, typical polypropylene submitted to this kind of treatment tends to soften and deform or turn yellow and/or become brittle.

WO 01/53078 discloses a multilayer film with one layer comprising a coupled propylene polymer and a further layer comprising an in-reactor blend of a substantially linear polyethylene or a homogeneously branched linear polyethylene and a linear low density polyethylene, to obtain a blown film having improved mechanical properties.

JP 2003053900 discloses a thermoplastic film with at least two layers, whereby a thermoplastic resin is used.

In packaging and medical applications highest transparency is a key requirement. As far as the film is not exposed to retorting conditions, blends of polyethylene with random polypropylene copolymer with high ethylene content can be used. However, in retortable applications the high ethylene content of the polypropylene component causes inacceptable high haze after steam sterilization. On the other hand, the use of heterophasic polypropylene with low ethylene content also does not solve the problem as the haze is already too high before sterilization and still is further increased by sterilization. The substitution of the polypropylene component is not simply possible as otherwise the stability under sterilizing cannot be guaranteed.

As far as peelable layers are desired there is another conflict of aims. On the one hand, the peelable layer shall have excellent adherence to the base layer. Particularly when the base layer is a random polypropylene copolymer, the existing materials either cannot be subjected to retorting conditions or suffer from inacceptable adherence and/or release.

Thus it is an object of the present invention to provide a composition and a film having an optimal balance between the mechanical properties and optical properties both after sterilization. Further it is an object of the present invention to provide a retortable film having excellent peelable properties.

The present invention is based on the finding that the above object can be achieved if a polyolefin comprising propylene and at least one C₄ to C₁₀ alpha olefin is incorporated into the composition or into the film.

Thus the present invention provides a composition comprising
(A) a LDPE in an amount of 15 to 50 wt.-%, and
(B) a polymer blend in an amount of 50 to 85 wt.-%,
   wherein polymer blend (B) consists of
   20 to 80 wt.-% propylene random copolymer having a C₂ content of equal or below 4 wt.-%; and
   80 to 20 wt.-% of a polyolefin comprising propylene and at least one C₄₋₁₀ alpha olefin.

The compositions can be made into film having exceptionally low haze values and at the same time extraordinary stability when being sterilized. Surprisingly it has been found that the optical properties are exceptionally improved by the incorporation of a polyolefin comprising at least one C₄₋₁₀ alpha olefin. Still further, it has been surprisingly found that the composition allows the provision of peelable layers, which have high adherence and have a minimized release when being peeled off.

Retortable means that the film, co-extruded film or composition can withstand a treatment of sterilisation involving temperatures in the range of 119 to 123 °C for a duration of at least 30 minutes. A treatment of sterilisation shall denote any method known in the art for killing bacteria such as heat treatment and heat treatment involving steam.

An LDPE according to the present invention is a low density polyethylene having a density equal or below 0.940 g/cm³.

Polymer blend (B) is a mixture of a random polypropylene copolymer and a polyolefin comprising C₄ to C₁₀ alpha olefins.

A random polypropylene copolymer denotes a copolymer substantially composed of polypropylene monomer units with additional comonomer or comonomers being randomly distributed. The random polypropylene copolymer according to the present invention has a C₂ content of equal or below 4 wt%. The term C₂ content denotes the amount of ethylene monomer units being comprised in the random polypropylene originating from the use of ethylene as a monomer.

A polyolefin comprising polypropylene and at least one C₄ to C₁₀ alpha olefin denotes a polyolefin polymer composed of polypropylene units and alpha olefin monomer units selected from C₄ to C₁₀ alpha olefin(s).

The composition preferably has an amount of component (A) of 20 to 45 wt%, most preferably of 25 to 40 wt%.

Further, the composition preferably has an amount of component (B) of 55 to 80 wt%, most preferably of 60 to 75 wt%.

The composition according to the present invention preferably has a melt flow rate measured according to ISO 1133 (230°C, 2.16 kg) of 5 to 20 g/10 min, more preferably 6 to 18 g/10 min and most preferably 7 to 16 g/10 min.

The composition preferably has a total amount of propylene units of at least 50 wt%, more preferably from 53 wt% to 75 wt% and most preferably from 55 to 65 wt%, based on the total composition.

Further, the composition preferably has a total amount of ethylene units of not more than 50 wt%, more preferably from 25 wt% to 45 wt% and most preferably from 30 to 40 wt%, based on the total composition.

Still further, the composition preferably has a total amount of C₄ to C₁₀ alpha olefin units of not more than 5 wt%, more preferably from 0.5 wt% to 5 wt% and most preferably from 1.0 to 4.5 wt%, based on the total composition.

In a preferred embodiment, the polymeric components of the composition consist of propylene, ethylene and C₄ to C₁₀ alpha olefin units.

The LDPE according to the present invention preferably has a melt flow rate measured according to ISO 1133 (190°C, 2.16 kg) of 2 to 30 g/10min, more preferably 3 to 25 g/10min and most preferably 5 to 20 g/10min.

The LDPE (A) preferably has a density of 910 to 935 kg/m³ more preferably 915 to 930 g/cm³ and most preferably 918 to 925 kg/m³.

It is preferred that the LDPE (A) has a weight average molecular weight M_{w} of 300 to 600 kg/mol, more preferably of 350 to 550 kg/mol, most preferably of 400 to 500 kg/mol.

The number average molecular weight Mₙ of the LDPE (A) is preferably from 5 to 25 kg/mol, more preferably from 8 to 20 kg/mol, and most preferably from 10 to 15 kg/mol.

The molecular weight distribution of the LDPE, defined as M_{w}/Mₙ, is preferably from 15 to 50, more preferably from 20 to 45, and most preferably from 25 to 40.

The LDPE (A) preferably has a melt temperature Tₘ of 95°C to 125°C, more preferably of 100°C to 115°C.

Further, the LDPE (A) preferably has a crystallisation temperature T_{cr} of 80°C to 105°C, more preferably of 85 to 100 °C.

The ethylene content in the propylene random copolymer is typically equal or below 4 wt.-%. Preferably the ethylene content is equal or below 3.6 wt.-%.

The propylene random copolymer may comprise a further comonomer or further comonomers apart from ethylene, whereby the total amount of comonomer or comonomers including ethylene is preferably equal or below 7 wt.-%, more preferably equal or below 5 wt.-%.

The propylene random copolymer is preferably a propylene ethylene copolymer.

The propylene random copolymer preferably has a melt flow rate measured according to ISO 1133 (230 °C, 2.16 kg) within the range of 1 to 20, preferably 5 to 18 and most preferably 8 to 15 g/10min.

It is preferred that the propylene random copolymer is present in component (B) in an amount of 25 to 75 wt%.

The propylene random copolymer preferably has a density of 900 to 910 kg/m³.

It is preferred that the propylene random copolymer has a weight average molecular weight M_{w} of 150 to 400 kg/mol, more preferably of 200 to 350 kg/mol, most preferably of 220 to 300 kg/mol.

The number average molecular weight Mₙ of the propylene random copolymer is preferably from 20 to 75 kg/mol, more preferably from 30 to 60 kg/mol, and most preferably from 40 to 50 kg/mol.

The molecular weight distribution of the propylene random copolymer, defined as M_{w}/Mₙ, is preferably from 2 to 12, more preferably from 2.5 to 8, and most preferably from 3 to 6.

The propylene random copolymer preferably has a melt temperature Tₘ of 120°C to 175°C, more preferably of 130°C to 155°C.

Further, the propylene random copolymer preferably has a crystallisation temperature T_{cr} of 90°C to 120°C, more preferably of 95 to 110 °C.

The propylene random copolymer preferably has a flexural modulus determined according to ISO 178 on a specimen prepared by injection moulding according to ISO 1873-2 of at least 700 MPa, more preferably of at least 800 MPa, and most preferably of at least 850 MPa.

C₄ to C₁₀ alpha olefin monomer units include 1-butene, 2-pentene, 1-hexene, 1-heptene, 1-octene, 1-nonene, 1-decene as well as methyl substituted olefins such as 2-methyl-propene, 2-methyl-butene, 2-methylpentene, 2-methyl-hexene, 2-methyl-heptene, 2-methyl-octene, 2-methylnonene. Also included are alkyl-substituted alkenes up to a total carbon number of 10. Typically the polyolefin is a copolymer of propylene and the C₄ to C₁₀ alpha olefins alpha olefin monomers as mentioned above. The polyolefin according to this invention can comprise polypropylene and one alpha olefin or can comprise polypropylene and two or three alpha olefins.

The polyolefin comprising propylene and at least one C₄ to C₁₀ alpha olefin according to the present invention is different from the propylene random copolymer. "Being different" means that the two polymers differ as to at least one property.

It is preferred that the polyolefin has a C₄ to C₁₀ content of 3 to 15 wt.-%, more preferably of 6 to 14 wt.-%, even more preferably of 7 to 11 wt.-% and most preferably of 7 to 9 wt.-%.

The polyolefin comprising propylene and at least one C₄ to C₁₀ alpha olefin is preferably a C₂C₃C₄₋₁₀ terpolymer in a first embodiment and a C₃C₄₋₁₀ random copolymer in a second embodiment.

The polyolefin comprising propylene and at least one C₄ to C₁₀ alpha olefin according to the first and the second embodiment preferably has a melt flow rate measured according to ISO 1133 (230 °C, 2.16 kg) within the range of 1 to 20, preferably 3 to 15 and most preferably 5 to 10 g/10min.

It is preferred that the polyolefin comprising propylene and at least one C₄ to C₁₀ alpha olefin according to the first and the second embodiment is present in component (B) in an amount of 25 to 75 wt%.

It is preferred that the polyolefin comprising propylene and at least one C₄ to C₁₀ alpha olefin according to the first and the second embodiment has a weight average molecular weight M_{w} of 150 to 400 kg/mol, more preferably of 200 to 350 kg/mol, most preferably of 220 to 300 kg/mol.

The number average molecular weight Mₙ of the polyolefin comprising propylene and at least one C₄ to C₁₀ alpha olefin according to the first and the second embodiment is preferably from 20 to 75 kg/mol, more preferably from 30 to 60 kg/mol, and most preferably from 40 to 50 kg/mol.

The molecular weight distribution of the polyolefin comprising propylene and at least one C₄ to C₁₀ alpha olefin according to the first and the second embodiment, defined as M_{w}/Mₙ, is preferably from 2 to 12, more preferably from 2.5 to 8, and most preferably from 3 to 6.

The polyolefin comprising propylene and at least one C₄ to C₁₀ alpha olefin according to the first and the second embodiment preferably has a melt temperature Tₘ of 110°C to 165°C, more preferably of 125°C to 150°C.

Further, the polyolefin comprising propylene and at least one C₄ to C₁₀ alpha olefin according to the first and the second embodiment preferably has a crystallisation temperature T_{cr} of 75°C to 110°C, more preferably of 80 to 95°C.

These ranges above apply to both, the first and second embodiment as described in the following.

The C₂C₃C₄₋₁₀ terpolymer according to the first embodiment preferably is composed of equal or less than 2 wt.-%, preferably equal or less than 1.4 wt.-% and most preferably equal or less than 1.2 wt.-% ethylene units. The lower ethylene content of this embodiment typically will be above 0.2 wt.-% ethylene units.

The C₂C₃C₄₋₁₀ terpolymer preferably includes from 3 to 15 wt.-%, more preferably 6 to 14 wt.-%, even more preferably 7 to 11 wt.-% and most preferably 7 to 9 wt.-% C₄₋₁₀ olefin units.

The C₂C₃C₄₋₁₀ terpolymer according to the first embodiment preferably is a C₂C₃C₄ terpolymer.

In a particularly preferred embodiment, the C₂C₃C₄ terpolymer has a C₂ content from 0.5 to 1.4 wt.-% and at the same time a C₄ content of 7 to 9 wt.-%.

When the polyolefin comprising propylene and one C₄ to C₁₀ alpha olefin is a C₃C₄₋₁₀ random copolymer, the amount of C₄ to C₁₀ monomer units is preferably from 3 to 15 wt.-%, more preferably 6 to 14 wt.-%, even more preferably 7 to 11 wt.-%and most preferably 7 to 9 wt.-% C₄₋₁₀ olefin units.

The C₃C₄₋₁₀ random copolymer is preferably a C₃C₄ random copolymer.

In a particularly preferred embodiment, the C₃C₄ random copolymer has a C₄ content of 7 to 9 wt.-%.

The ratio of the melt flow rates of the LDPE (A) and the blend (B) preferably fall into certain ranges.

The ratio of MFR (190°/2.16kg) [LDPE (A)] / MFR (230°/2.16kg) [blend (B)] preferably is at least 0.5, more preferably is at least 0.7 and most preferably at least 0.9. The upper limit of the ratio of MFR (190°/2.16kg) [LDPE (A)] / MFR (230°/2.16kg) [blend (B)] preferably is 1.0.

The present invention in a first embodiment further relates to a film comprising the composition as described above including all preferred embodiments as disclosed above.

The present invention in a second embodiment further relates to a film comprising an LDPE and a blend, whereby the blend consists of a propylene random copolymer having a C₂ content of equal or below 4 wt.-% and a polyolefin comprising propylene and at least one C₄₋₁₀ alpha olefin. The film according to the second embodiment preferably comprises the inventive composition including all preferred embodiments as disclosed above. The film according to the second embodiment preferably consists of the inventive composition including all preferred embodiments as disclosed above.

The present invention further relates to a coextruded film comprising a base layer and a functional layer consisting of the inventive film as described above. The functional layer can consist of the film according to the first or according to the second embodiment.

The coextruded film preferably consists of a base layer and a functional layer, whereby the functional layer consists of a film according to the first or the second embodiment as described.

The coextruded film comprising the film according to the first embodiment preferably has a haze measured according to ASTM D 1003 of below or equal 7 %, more preferably below or equal 6.7 % when being sterilised by subjecting the film to a temperature of 121 °C or above for at least 30 minutes. The coextruded film comprising the film according to the first embodiment preferably has a clarity as measured according to ASTM D 1003 of at least 75 when being sterilised with saturated steam by subjecting the film to a temperature of 121 °C or above for at least 30 minutes.

The coextruded film comprising the film according to the second embodiment is preferably characterized by an haze measured according to ASTM D 1003 of below or equal 7 %, more preferably below or equal 6.7 % when being sterilised with saturated steam by subjecting the film to a temperature of 121 °C or above for at least 30 minutes.

The coextruded film comprising the film according to the second embodiment is preferably characterized by a clarity as measured according to ASTM D 1003 of at least 75 when being sterilised with saturated steam by subjecting the film to a temperature of 121 °C or above for at least 30 minutes.

The base layer of the co-extruded film preferably has a thickness of 100 micrometer or lower, more preferably 75 micrometer or lower and most preferably 50 micrometer or lower. For commercial reasons the base layer typically is at least 10 micrometers thick.

The base layer of the coextruded film preferably comprises a random polypropylene copolymer and more preferably consists of the random polypropylene copolymer and one or more additives in a total amount of up to 8 wt.-%, more preferably up to 3 wt.-%, with respect to the random polypropylene copolymer.

The functional layer of the co-extruded film preferably is a peelable layer.

The functional layer preferably has a thickness of 20 micrometer or lower, more preferably 15 micrometer or lower and most preferably 10 micrometer or lower. For cost reasons the functional layer typically will be at least 1 micrometer thick.

After sterilization the functional layers of the invention show high adherence and have a minimized release, when being peeled off.

It is preferred that the peel force after sealing at a temperature of 160°C or higher is from 2.6 to 7.0 N/15 mm after sterilization with saturated steam at a temperature of 121 °C or higher for a time of 30 minutes or more.

The difference of the peel forces before and after sterilization with saturated steam at a temperature of 121°C or higher for a time of 30 minutes or more is preferably not more than ±20 %.

The present invention also relates to an article comprising the composition, film(s) and/or co-extruded film as described above and sheets. Typical articles include packaging for medical devises and packaging for food.

The present invention is also concerned with the use of a C₄₋₁₀ alpha olefin in a film for lowering haze-increase when sterilising the film. It is preferred that the amount of C₄₋₁₀ alpha olefin with respect to the film is in the range of 0.5 wt.-% and 5 wt.-%. The use of a C₄ alpha olefin is a particularly preferred.

The present invention also relates to the use of a composition as described above as a peel layer.

The propylene random copolymer and the polyolefin comprising propylene and at least one C₄ to C₁₀ alpha olefin according to the present invention may be produced by single- or multistage process polymerisation of propylene or propylene and alpha-olefin and/or ethylene such as bulk polymerisation, gas phase polymerisation, slurry polymerisation, solution polymerisation or combinations thereof using conventional catalysts.

A homo- or copolymer can be made for example in loop reactors or in a combination of loop and gas phase reactor. Those processes are well known to one skilled in the art.

A preferred process is a combination of a bulk slurry loop reactor(s) and gas phase reactor(s).

The propylene random copolymer may be produced by known polymerisation processes such as solution, suspension and gas-phase polymerisation using conventional catalysts.

Ziegler-Natta catalysts as well as metallocene catalysts are suitable catalysts for the polymerization of the propylene random copolymer and the polyolefin comprising propylene and at least one C₄ to C₁₀ alpha olefin.

A widely used process is the solution polymerisation. Ethylene, propylene and catalyst systems are polymerised in an excess of hydrocarbon solvent.

The LDPE component is made by homopolymerisation of ethylene in a high-pressure autoclave or tubular reactor with peroxide initiation. Those processes are well known to one skilled in the art.

The composition of the present invention is preferably prepared by mechanical blending of the components (A) and (B), and optionally further additives.

The present invention also relates to the production the inventive film and co-extruded film. In principle the films can be as cast film or blown film.

In a cast process, a cooling of the melt is achieved by the use of a chill roll, so that polypropylene films with an excellent balance of optical and mechanical properties are obtained. The draw ratio is adjusted such that the desired thickness is obtained.

It is preferred that the cast film is produced on a co-extrusion cast film line with chill roll temperature of 5 to 35°C and a chill roll diameter of 100 to 1000 mm.

In another embodiment the film are made by film blowing technology. In this case air cooling is used to cool the melt.

The expansion ratio between the die and the blown tube of the film is preferably 2 to 4 times of the die diameter.

In the following the invention is explained by the way of examples which are not limiting.

### Examples

### LDPE

A commercially available LDPE from a high-pressure process (CA8200, distributed by Borealis) having a density of 920 g/cm³ and an MFR (190°C, 2.16 kg) of 7.5 g/10 min was used.

### Random polypropylene copolymer

A commercially available polypropylene random copolymer (RE906CF, distributed by Borealis) having an MFR (230°C/2.16 kg) of 13.0 g/10min, a density of 905 kg/m³ and a random C₂ content of 3.5 wt% was used.

The propylene random copolymer was produced in a multistage polymerisation process of propylene and ethylene with a serial loop - gas phase reactor combination. Conventional Ziegler-Natta catalysts were used for the polymerisation process. The polymer produced in the first reactor (loop) is transferred into the second (gas phase) reactor, where the polymerisation continues. The resulting reactor blend is additionally homogenised and stabilised in a twin-screw extruder.

### Polyolefin containing C₄-C₁₀ alpha olefins

A commercially available terpolymer (TD109CF, distributed by Borealis) having an MFR (230°C/2.16 kg) of 7.0 g/10min, a density of 905 kg/m³, a C₄ content of 9.0 wt% and a random C₂ content of 1.0 wt% was used.

The terpolymer was produced in a multistage polymerisation process of propylene, 1-butene and ethylene with a serial loop - gas phase reactor combination. Conventional Ziegler-Natta catalysts were used for the polymerisation process. The polymer produced in the first reactor (loop) is transferred into the second (gas phase) reactor, where the polymerisation continues. The resulting reactor blend is additionally homogenised and stabilised in a twin-screw extruder.

### Film production

A mixture consisting of the random polypropylene copolymer, the polyolefin and the LDPE as listed in Tables 1 and 2 for inventive Examples E1, E2 and E3 was made in a lab-scale twin-screw extruder with 220°C mass temperature. For comparative Examples C1 and C2 the LDPE and the random polypropylene copolymer or the polyolefin as listed in Tables 1 and 2 were blended as such.

This mixture was converted into a cast film on a Coex cast film line and coextruded together with a carrier layer as described below in the measurement methods (e) under the following conditions: Output 60 kg/h with a chill roll temperature 15°C and a chill roll diameter of 600 mm.

### Measurement methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR₂ of polypropylene is determined at a temperature of 230 °C and a load of 2.16 kg. The MFR₂ of polyethylene is determined at a temperature of 190 °C and a load of 2.16 kg.

### b) Weight Average Molecular Weight and MWD

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 ml/min. 216.5 µl of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 ml (at 160 °C) of stabilized TCB (same as mobile phase) and keeping for 3 hours with continuous shaking prior sampling in into the GPC instrument.

### c) Melting and crystallisation temperature

The melting and crystallisation temperature Tₘ and T_{c} are determined according to ISO 11357-1, -2 and -3 with a TA-Instruments 2920 Dual-Cell with RSC refrigeration apparatus and data station. A heating and cooling rate of 10 °C/min is applied in a heat / cool / heat cycle between +23 and +210 °C, the crystallisation temperature T_{c} being determined in the cooling step and the Tₘ melting temperature being determined in the second heating step.

### d) Test for qualifying the amount of release

The peel performance of the composition has been measured as follows:
Two identical 50 µm thick coextruded two-layered films with the 42 µm thick carrier layer consisting of RD234CF (propylene random copolymer with 2.5 wt% C₂ content, commercially available from Borealis AG) and the 8 µm thick layer consisting of the composition of this patent application were sealed so that the layers with the composition of this patent application were sealed against each other. The sealing seam was produced with one sided heating bars, a pressure of 600N, a sealing time of 0.5 seconds and at 160°C and 180°C, respectively.

For one of the two identical two-layered films the sealing seams were retorted as described in (e) and the original as well as the retorted sealing seams were measured for their peel force according to a modified tensile test (following ISO 527) at 23°C.

### e) Retorting experiments

The retorting is done by subjecting the films to saturated steam of at least 121°C for min. 30 minutes. In order to avoid the films sticking together after the retorting, the film samples are fixed in frames during the sterilisation process.

### f) Flexural Modulus

Flexural strength properties were determined according to ISO 178.
Injection moulded specimens of dimensions 80x10x4 mm were used, which were prepared according to ISO 1873-2.

Flexural modulus (in MPa) was determined according to ISO 178. The measurement was conducted at 23 °C temperature.

### g) Haze and clarity

Haze and clarity of 50 µm thick coextruded films with a commercially available polypropylene random copolymer with 2,5 wt% C₂ content as 42 µm thick carrier layer were determined according ASTM D 1003.

### Results

The optical properties of the sterilized and non-sterilized coextruded films were determined. The films comprising the layer made of the compositions according to the invention show low haze and high clarity even after sterilization.

**Table 1: Optical properties of sterilized and non sterilized multilayered films**

| | | non-sterilised | | sterilised | |
|---|---|---|---|---|---|
| | Composition | Haze [%] | Clarity [%] | Haze [%] | Clarity [%] |
| C1 | 35% LDPE | 6.0 | 76.6 | 7.9 | 73.1 |
| | 65% RANDOM PP COPO | | | | |
| E1 | 35% LDPE | 5.9 | 78.5 | 6.6 | 75.2 |
| | 48% RANDOM PP COPO | | | | |
| | 17% POLYOLEFIN | | | | |
| E2 | 35% LDPE | 5.8 | 79.9 | 6.6 | 77.8 |
| | 32% RANDOM PP COPO | | | | |
| | 32% POLYOLEFIN | | | | |
| E3 | 35% LDPE | 5.5 | 80.4 | 7.0 | 77.4 |
| | 17% RANDOM PP COPO | | | | |
| | 48% POLYOLEFIN | | | | |
| C2 | 35% LDPE | 5.4 | 80.1 | 13.3 | 73.2 |
| | 65% POLYOLEFIN | | | | |

Further the sealed sterilized and non-sterilized coextruded films were subjected to a peel off test. It has been found that the peel force needed to detach the sealing seam of films comprising the layer made of the compositions according to the invention is only influenced by retorting to a minor extent.

**Table 2: Sealing properties of sterilized and non sterilized multilayered films**

| | | Peel force [N/15mm] | | | |
|---|---|---|---|---|---|
| | | non-sterilised | | sterilised | |
| | Composition | 160°C | 180°C | 160°C | 180°C |
| C1 | 35% LDPE | n.d. | 4.74 | n.d. | 3.58 |
| | 65% RANDOM PP COPO | | | | |
| E1 | 35% LDPE | 3.27 | 6.13 | 2.84 | 5.26 |
| | 48% RANDOM PP COPO | | | | |
| | 17% POLYOLEFIN | | | | |
| E2 | 35% LDPE | 2.78 | 5.10 | 2.80 | 4.31 |
| | 32% RANDOM PP COPO | | | | |
| | 32% POLYOLEFIN | | | | |
| E3 | 35% LDPE | 2.75 | 4.21 | 2.66 | 3.86 |
| | 17% RANDOM PP COPO | | | | |
| | 48% POLYOLEFIN | | | | |
| C2 | 35% LDPE | 2.86 | 3.48 | 2.49 | 3.87 |
| | 65% POLYOLEFIN | | | | |

| | | | | | |
|---|---|---|---|---|---|
| n.d. = not determined | | | | | |

## Claims

1. Composition comprising
(A) a LDPE in an amount of 15 to 50 wt.-% and
(B) a polymer blend in an amount of 50 to 85 wt.-%,
wherein polymer blend (B) consists of
20 - 80 wt.-% propylene random copolymer having a C₂ content of equal or below 4 wt.-% and
80 - 20 wt.-% of a polyolefin comprising at least one C₄₋₁₀ alpha olefin.

2. Composition according to any of the preceding claims, wherein the propylene random copolymer has a melt flow rate (2.16 kg, 230°C) of 1 to 20 g/10 min.

3. Composition according to any of the preceding claims wherein the LDPE (A) has a melt flow rate (190°/2.16 kg) of 2 to 30 g/10 min.

4. Composition according to any of the preceding claims wherein the melt flow rate (190°/2.16kg) of the LDPE (A) is 0.5 - 1.0 times the melt flow rate (230°/2.16kg) of blend (B).

5. Composition according to any of the preceding claims, wherein the polyolefin is a random copolymer being different from the propylene random copolymer.

6. Composition according to any of the preceding claims, wherein the polyolefin has a C₄-C₁₀ content of 3 to 15 wt.-%.

7. Composition according to any of the preceding claims, wherein the polyolefin is a C₂C₃C₄ terpolymer.

8. Composition according to any of the claims 1 to 6, wherein the polyolefin is a C₃C₄ random copolymer.

9. Composition according to any of the preceding claims wherein the propylene random copolymer has a flexural modulus determined according to ISO 178 on a specimen prepared by injection moulding of at least 700 MPa.

10. Film comprising a LDPE and a blend, whereby the bend consists of a propylene random copolymer having a C2 content of equal or below 4 wt.-% and a polyolefin comprising propylene and at least one C₄₋₁₀ alpha-olefin.

11. Coextruded film comprising a base layer and a functional layer, whereby the functional layer consists of the film according to claim 10, and whereby the coextruded film has a haze measured according to ASTM D 1003 of below or equal 7 % when being sterilised with saturated steam at a temperature of 121 °C or higher for a time of 30 minutes or more and/or a clarity as measured according to ASTM D 1003 of at least 75 % when being sterilised with saturated steam at a temperature of 121°C or higher for a time of 30 minutes or more.

12. Coextruded film according to claim 11 whereby the functional layer has a thickness of 20 micrometer or lower.

13. Coextruded film according to claims 11 or 12, whereby the base layer has a thickness of 100 micro meter or lower.

14. Coextruded film according to any of claims 11 to 13, whereby peel force after sealing at a temperature of 160°C or higher is from 2.6 to 7.0 N/15 mm after sterilization with saturated steam at a temperature of 121°C or higher for a time of 30 minutes or more and the difference of the peel forces before and after sterilization with saturated steam at a temperature of 121 °C or higher for a time of 30 minutes or more is not more than ±20 %.

15. Article comprising the composition, film and/or co-extruded film according to any of the preceding claims.

16. Use of a C₄₋₁₀ alpha olefin in a film for lowering haze-increase when sterilising the film.

17. Use of a composition according to any of claims 1 to 9 as a peel layer.
